# EUROPEAN PATENT APPLICATION

(11) **EP 0 968 787 A1**
(43) Date of publication of application: **05.01.2000**
(21) Application number: 97942250.8
(22) Date of filing: 03.10.1997
(51) Int. Cl.: B23K 1/00, B23K 3/00

(54) **METHOD AND APPARATUS FOR CONNECTING COMMUNICATION PIPES FOR HEAT EXCHANGER**

(71) Applicant: Daikin Industries, Limited, Osaka-shi, Osaka 530-0015 (JP)
(72) Inventor: YAMAMOTO, Yoshitaka, Kanaoka Factory, Sakai Plant, Sakai-shi, Osaka 591 (JP); TAKASE, Tatsumi, Kanaoka Factory, Sakai Plant, Sakai-shi, Osaka 591 (JP); EN, Bingou, Kanaoka Factory, Sakai Plant, Sakai-shi, Osaka 59 (JP)
(74) Representative: Laufhütte, Dieter, Dr.-Ing.
(86) International application number: JP9703557
(87) International publication number: WO9917901

(57) **Abstract**

Bodies (**81**) constituting a heat transfer tube (**80**) are passed through a fin group (**70**) formed of a multiplicity of heat transfer fins (**71**) thereby forming a body (**61**) of a heat exchanger. Next, brazing materials (**63**) are provided to connecting parts (**83**) formed at protruding ends of the heat transfer tube bodies (**81**) protruding from the fin group (**70**), respectively, and a connection pipe (**82**) constituting the heat transfer tube (**80**) is inserted into the connecting parts (**83**) of the heat transfer tube bodies (**81**) and is set therebetween. Thereafter, the protruding ends of the heat transfer tube bodies (**81**) are inserted, together with the connection pipe (**82**), into a heating cover (**20**), and an electric heater (**30**) is positioned sideward of the connecting parts (**83**) of the heat transfer tube bodies (**81**). Then, the electric heater (**30**) is operated for heating the connecting parts (**83**) of the heat transfer tube bodies (**81**) thereby melting the brazing materials (**63**). Finally, the protruding ends of the heat transfer tube bodies (**81**) are extracted, together with the connection pipe (**82**), from the heating cover (**20**) and are cooled thereby completing the brazing between the heat transfer tube bodies (**81**) and the connection pipe (**82**).

## Description

### [Technical Field]

This invention relates to a method of connecting a connection pipe in a finned tube heat exchanger and an apparatus for connecting the connection pipe.

### [Background Art]

As a heat exchanger in an air conditioner, there is conventionally known a finned tube heat exchanger formed by passing a plurality of heat transfer tubes through a fin group formed of a multiplicity of plate-shaped heat transfer fins laminated at predetermined intervals.

The heat transfer tube in the finned tube heat exchanger is formed into a single coil in a manner that a plurality of U-shaped hairpin-type long bodies for the heat transfer tube are connected through connection pipes. The heat transfer tube bodies are connected to the connection pipes by brazing.

For brazing, there is conventionally used flame brazing with a gas torch using acetylene gas or the like. In the flame brazing, the connecting part between the heat transfer tube body and the connection pipe is first heated through the direct application of flame to the connecting part. Thereby, a brazing material at the connecting part is melted by the flame so as to penetrate a contact surface between the heat transfer tube body and the connection pipe, so that the heat transfer tube body is connected to the connection pipe.

However, since the flame brazing is conducted in a manner that a worker directly applies flame to the heat transfer tube body or other parts, local heating readily occurs so that the brazing material non-uniformly penetrates the contact surface. This causes a problem that brazing accuracy is poor. In particular, since brazing accuracy largely depends upon worker's proficiency, this invites a problem that brazing quality lacks stability.

To cope with these problems, there is a brazing apparatus equipped with a heating coil using high-frequency induced current as disclosed in Japanese Patent Application Laid-Open Gazette No.3-264158. In this brazing apparatus, the heating coil is formed so as to be capable of intimate contact with the connecting part between elements. The brazing apparatus heats the connecting part in a manner of bringing the heating coil into contact with the connecting part between elements and providing a flow of high-frequency induced current to the heating coil. As a result, the connecting part between elements can be uniformly heated.

### -Problems to be solved-

In the brazing apparatus using high-frequency induced current, the problem of local heating by flame brazing can be solved, whereas there is another problem that a high-accuracy positioning of the heating coil to the connecting part is required. Specifically, when the heating coil is moved out of position, the heating condition largely changes so that brazing accuracy varies. Particularly, in the finned tube heat exchanger having a large number of brazing points, it is difficult to prevent the heating coil from being moved out of position thereby stabilizing brazing quality.

Further, the above apparatus is provided with a single heating coil. Accordingly, when a large number of brazing points exist as in the case of connection of the connection pipes of the finned tube heat exchanger, it is necessary to bring the heating coil into intimate contact with the connecting parts in every brazing point. This expends much time and efforts in brazing, which increases a brazing time and decreasing brazing efficiency.

The present invention has been made in view of the above problems and therefore, has its object of increasing brazing accuracy, simplifying the brazing work and reducing the brazing time.

### [Disclosure of Invention]

### -Summary of Invention-

In the present invention, in a body (**61**) of a heat exchanger, all connecting parts (**83**) of bodies (**81**) for a heat transfer tube, to which connection pipes (**82**) are to be affixed, are surrounded by a heating cover (**20**) and the connecting parts (**83**) are heated sideways by a heater (**30**) provided in the heating cover (**20**).

### -Solution-

More specifically, a method of connecting a connection pipe of a heat exchanger according to a measure taken in the present invention comprises a first step of passing bodies (**81**) constituting a heat transfer tube (**80**) through a fin group (**70**) formed of a multiplicity of heat transfer fins (**71**) laminated at predetermined intervals thereby forming a body (**61**) of a heat exchanger.

Further, the method comprises after the first step, a second step of providing brazing materials (**63**) to connecting parts (**83**) formed at protruding ends of the heat transfer tube bodies (**81**) protruding from the fin group (**70**), respectively, and inserting a connection pipe (**82**) constituting the heat transfer tube (**80**) into the connecting parts (**83**) of the heat transfer tube bodies (**81**) to set the connection pipe (**82**) therebetween.

Furthermore, the method comprises after the second step, a third step of inserting the protruding ends of the heat transfer tube bodies (**81**) and the connection pipe (**82**) into a heating cover (**20**) which is formed to surround a protruding part of the heat transfer tube (**80**) formed of the protruding ends of the heat transfer tube bodies (**81**) and the connection pipe (**82**) and has a heater (**30**), positioning the heater (**30**) sideward of the connecting parts (**83**) of the heat transfer tube bodies (**81**) and operating the heater (**30**) for heating the connecting parts (**83**) of the heat transfer tube bodies (**81**) thereby melting the brazing materials (**63**).

Further, the method comprises after the third step, a fourth step of extracting the protruding ends of the heat transfer tube bodies (**81**) and the connection pipe (**82**) from the heating cover (**20**) to cool them thereby completing the brazing between the heat transfer tube bodies (**81**) and the connection pipe (**82**).

The method of the present invention can comprise after the fourth step, a fifth step of connecting pipes (**62**) to two connecting parts (**83**) for pipe of the heat transfer tube bodies (**81**) located at both ends of the heat transfer tube (**80**), respectively.

In the third step of the method of the present invention, an inert gas can be supplied to a heating space inside the heating cover (**20**) through a gas supply pipe (**12**).

In the second step of the method of the present invention, heat insulating caps (**11**) can be respectively set on the two connecting parts (**83**) for pipe as both ends of the heat transfer tube (**80**) to which the pipes (**62**) are respectively connected in addition to the insertion of the connection pipe (**82**). Further, in the fourth step, the heat insulating caps (**11**) can be removed from the heat transfer tube bodies (**81**) in addition to the cooling of the heat transfer tube bodies (**81**) and the connection pipe (**82**).

The heating cover (**20**) in the method of the present invention can be open at its top and bottom surfaces for surrounding only the side of the protruding part of the heat transfer tube (**80**).

The heating cover (**20**) in the method of the present invention is preferably formed in a box the bottom surface of which is open for surrounding the side and the top of the protruding part of the heat transfer tube (**80**).

A heat insulating cover (**40**) for covering the side and top surfaces of the heating cover (**20**) can be provided outside the heating cover (**20**) in the method of the present invention.

The heater (**30**) in the method of the present invention can be embedded in the heating cover (**20**).

The heater (**30**) in the method of the present invention can be provided in a manner to be exposed inwardly from the heating cover (**20**).

It is preferable that a heat insulating plate (**50**) for separating the bottom of the heating cover (**20**) and the fin group (**70**) is provided at the bottom end of the heating cover (**20**) and a through hole (**51**) through which the protruding part of the heat transfer tube (**80**) passes is formed in the heat insulating plate (**50**).

An apparatus for connecting a connection pipe according to another measure taken in the present invention is directed to a heat exchanger including: a fin group (**70**) formed of a multiplicity of heat transfer fins (**71**) laminated at predetermined intervals; and a heat transfer tube (**80**) formed of bodies (**81**) which pass through the fin group (**70**) and have protruding ends protruding from the fin group (**70**) and a connection pipe (**82**) connected to the heat transfer tube bodies (**81**) at connecting parts (**83**) formed at the protruding ends of the heat transfer tube bodies (**81**).

The apparatus comprises a heating cover (**20**) formed to accommodate and surround a protruding part of the heat transfer tube (**80**) protruding from the fin group (**70**).

Further, the apparatus comprises a heater (**30**), provided in the heating cover (**20**) to come sideward of the connecting parts (**83**) of the heat transfer tube bodies (**81**), for melting brazing materials (**63**) provided at the connecting parts (**83**) of the heat transfer tube bodies (**81**) by heating the connecting parts (**83**) in a state that the connection pipe (**82**) is inserted into the connecting parts (**83**) and is set therebetween.

The heating cover (**20**) in the apparatus of the present invention can be open at its top and bottom surfaces for surrounding only the side of the protruding part of the heat transfer tube (**80**).

Further, the heating cover (**20**) in the apparatus of the present invention is preferably formed in a box the bottom surface of which is open for surrounding the side and the top of the protruding part of the heat transfer tube (**80**).

A heat insulating cover (**40**) for covering the side and top surfaces of the heating cover (**20**) can be provided outside the heating cover (**20**) in the apparatus of the present invention.

The heater (**30**) in the apparatus of the present invention can be embedded in the heating cover (**20**).

The heater (**30**) in the apparatus of the present invention can be provided in a manner to be exposed inwardly from the heating cover (**20**).

It is preferable that a heat insulating plate (**50**) for separating the bottom of the heating cover (**20**) and the fin group (**70**) is provided at the bottom end of the heating cover (**20**) in the apparatus of the present invention and a through hole (**51**) through which the protruding part of the heat transfer tube (**80**) passes is formed in the heat insulating plate (**50**).

### -Operations-

According to the above features of the present invention, in the first step, the heat transfer fins (**71**) are threaded onto the heat transfer tube bodies (**81**), and are fixed to the heat transfer tube bodies (**81**) thereby forming a heat exchanger body (**61**).

Next, in the second step, brazing materials (**63**) are provided to the connecting parts (**83**) of the heat transfer tube bodies (**81**) and the heat insulating caps (**11**) are attached to the connecting parts (**83**) for pipe of the heat transfer tube bodies (**81**).

Then, in the third step, the heat exchanger body (**61**) is moved below the heating cover (**20**), the plurality of protruding ends of the heat transfer tube bodies (**81**) are introduced, together with the connection pipe (**82**), into the heating cover (**20**), and the heater (**30**) is operated for heating. Through the application of heat by the heater (**30**), the brazing materials (**63**) melt and penetrate contact surfaces of the heat transfer tube bodies (**81**) and the connection pipe (**82**). In the third step, an inert gas may be supplied from the gas supply pipe (**12**) to a heating space inside the heating cover (**20**).

Subsequently, in the fourth step, the heat transfer tube (**80**) is extracted from the heating cover (**20**), the connecting parts (**83**) and their surroundings are cooled, and the heat insulating caps (**11**) are removed.

The present invention can finally execute the fifth step. In the fifth step, pipes (**62**) are affixed to the connecting parts (**83**) for pipe of the heat transfer tube bodies (**81**) by brazing, respectively.

### -Effects of the Invention-

According to the present invention, since all the connecting parts (**83**) of the heat transfer tube bodies (**81**) and the connection pipes (**82**) in the heat exchanger body (**61**) are surrounded by the heating cover (**20**) and the connecting parts (**83**) are heated by the heater (**30**) provided in the heating cover (**20**)**,** the connecting parts (**83**) can be prevented from locally increasing in temperature and can be heated substantially uniformly. This realizes uniform penetration of the brazing materials (**63**) and increases brazing accuracy, thereby increasing the stability of brazing quality.

Further, since all the connecting parts (**83**) of the heat transfer tube bodies (**81**) in the heat exchanger body (**61**) can be heated together and the plurality of connection pipes (**82**) can be brazed at once, this simplifies the brazing work and decreases the brazing time, thereby increasing brazing efficiency.

Furthermore, even when the heat exchanger body (**61**) has a complicated form such as a half circle, it is essential only to change the shape of the heating cover (**20**) and the like so as to conform with the form of the heat exchanger body (**61**), which facilitates the brazing of the connection pipe (**82**) in various kinds of heat exchangers (**10**).

Further, when the heat insulating caps (**11**) are provided on the connecting parts (**83**) for pipe of the heat transfer tube bodies (**81**), the surfaces of the heat transfer tube bodies (**81**) can surely be prevented from producing oxide films and in particular, the inner surfaces of the heat transfer tube bodies (**81**) can surely be prevented from producing oxide films. This ensures brazing quality at the later step.

Furthermore, when an inert gas is supplied into the heating space inside the heating cover (**20**) at the brazing time, it can be restrained that the surfaces of the heat transfer tube bodies (**81**) and the surface of the connection pipe (**82**) each produce an oxide film. In particular, the use of the inert gas can restrain the outer surfaces of the heat transfer tube bodies (**81**) and the outer surface of the connection pipe (**82**) from producing oxide films. The heat insulating caps (**11**) can restrain the inner surfaces of the heat transfer tube bodies (**81**) from producing oxide films. In this manner, the heat transfer tube (**80**) can be kept clean and refrigerant flowing through the heat transfer tube (**80**) can surely be prevented from being mixed with foreign substances.

Further, when the heating cover (**20**) is formed so as to surround the side of the heat transfer tube (**80**) only, the heat transfer tube (**80**) can reduce its area for heat conduction. This increases an amount of heat to be applied from the heater (**30**) position of the heating cover (**20**). As a result, an amount of heat for heating the connecting parts (**83**) as brazing regions of the heat transfer tube bodies (**81**) can be increased, which reduces the brazing time. On the contrary, when the amount of heat for heating the brazing regions is not changed, an amount of voltage to be applied to the heater (**30**) can be reduced.

Furthermore, when the heating cover (**20**) is formed in a box so as to surround the entire protruding part of the heat transfer tube (**80**), an amount of heat to be dissipated to the outside can be reduced, which improves heating efficiency.

In particular, when the heating cover (**20**) is covered with the heat insulating cover (**40**), an amount of heat to be dissipated to the outside can extremely be reduced. This extremely decreases heat loss, which improves heating efficiency.

Further, when the heat insulating plate (**50**) is provided so as to establish heat insulation between the heating cover (**20**) and the fin group (**70**), thermal influences on the heat transfer fins (**71**) and the like can be prevented. Specifically, the heat transfer fins (**71**) and the like can be prevented from changing in color and quality due to heat from the heating cover (**20**).

### [Brief Description of the Drawings]

Fig. **1** is a cross-sectional end view of a connection pipe connecting apparatus showing Embodiment 1 of the present invention.
Fig. **2** is a perspective view showing essential parts of a heating cover and a heat exchanger in Embodiment 1.
Fig. **3** is a perspective view showing essential parts of a heat insulating cover and the heat exchanger in Embodiment 1.
Fig. **4** is a temperature characteristic diagram of a brazing region of a heat transfer tube in Embodiment 1.
Fig. **5** is a perspective view showing the essential part of the heat exchanger in Embodiment 1.
Fig. **6** is a side view showing the heat exchanger in Embodiment 1.
Fig. **7** is a front view showing the heat exchanger in Embodiment 1.
Figs. **8**(**a**)-**8**(**f**) are diagrams showing the steps of connecting heat transfer tube bodies and a connection pipe of the heat exchanger by brazing in Embodiment 1.
Fig. **9** is a cross-sectional end view of a connection pipe connecting apparatus showing Embodiment 2 of the present invention.
Figs. **10**(**a**)-**10**(**f**) are diagrams showing the steps of connecting heat transfer tube bodies and a connection pipe of a heat exchanger by brazing in Embodiment 2.
Fig. **11** is a cross-sectional end view of a connection pipe connecting apparatus showing Embodiment 3 of the present invention.
Fig. **12** is a cross-sectional end view of a connection pipe connecting apparatus showing Embodiment 4 of the present invention.
Fig. **13** is a cross-sectional end view of a connection pipe connecting apparatus showing Embodiment 5 of the present invention.
Fig. **14** is a cross-sectional end view of a connection pipe connecting apparatus showing Embodiment 6 of the present invention.
Fig. **15** is a cross-sectional end view of a connection pipe connecting apparatus showing Embodiment 7 of the present invention.
Fig. **16** is a cross-sectional end view of a connection pipe connecting apparatus showing Embodiment 8 of the present invention.

### [Best Mode for Carrying Out the Invention]

Below, detailed description will be made about embodiments of the present invention with reference to the drawings.

### -Embodiment 1-

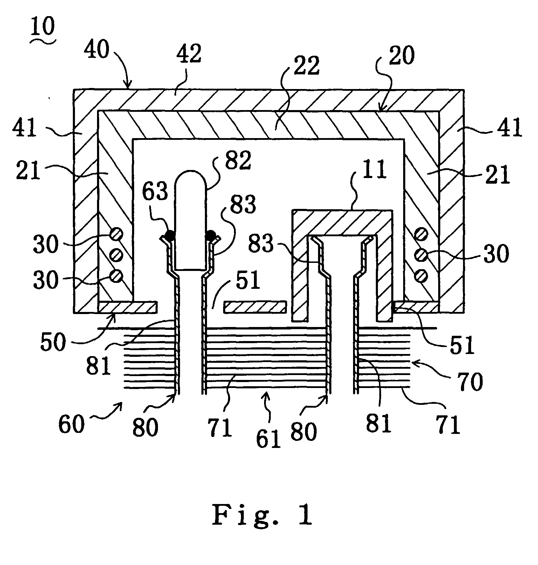

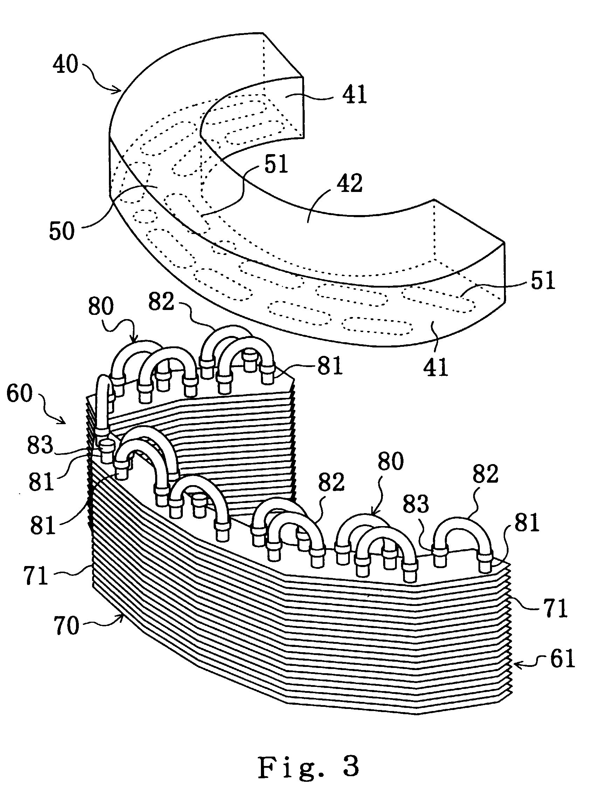

As shown in Figs. **1** to **3**, the present invention is characterized by a connection pipe, connecting apparatus (**10**), which brazes a connection pipe (**82**) in a heat exchanger (**60**).

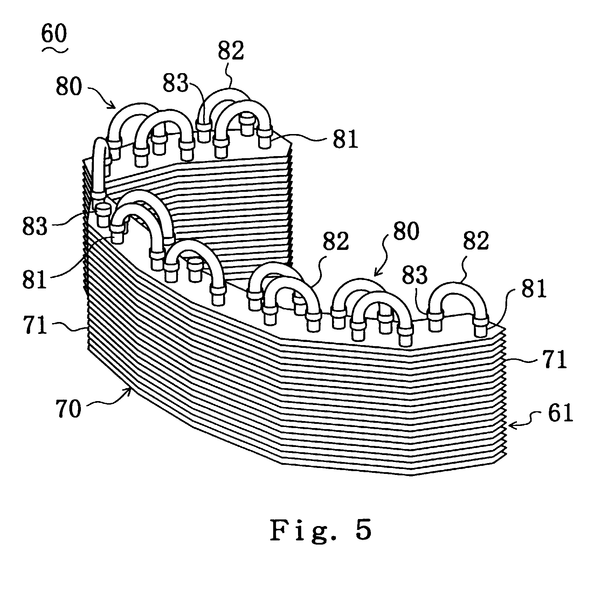

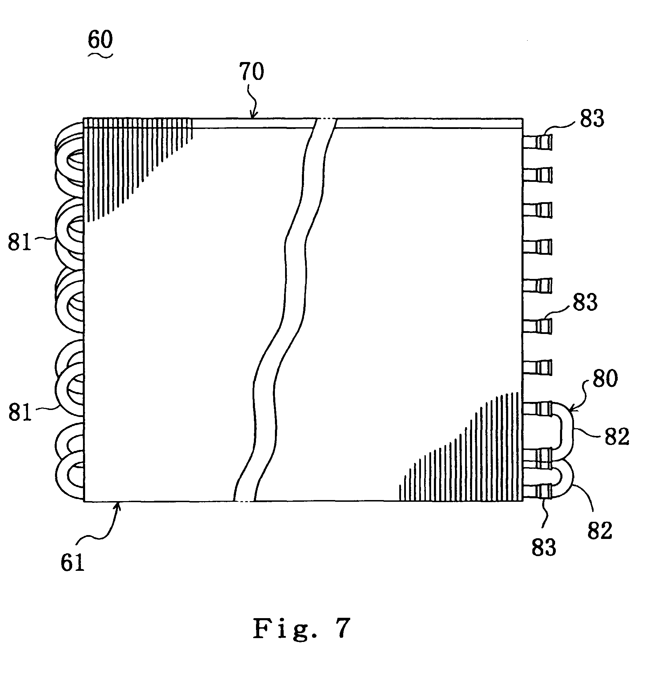

The heat exchanger (**60**) will be first described. As shown in Figs. **5** to **7**, the heat exchanger (**60**) is a finned tube heat exchanger provided in an indoor unit of an air conditioner so as to execute heat exchange between room air and refrigerant.

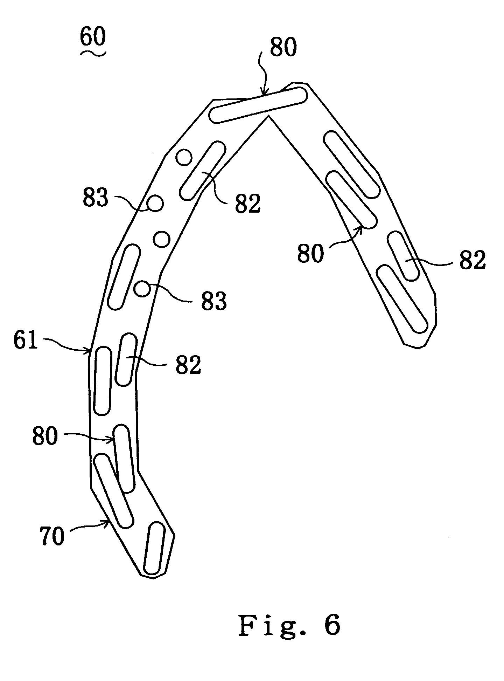

The heat exchanger (**60**) consists of a fin group (**70**) and a plurality of heat transfer tubes (**80**). The fin group (**70**) is formed such that a multiplicity of plate-shaped heat transfer fins (**71**) are laminated at predetermined intervals. As shown in Fig. **6**, the heat transfer fins (**71**) are each formed in an approximate half circle when viewed from the side.

In the present embodiment, the heat transfer tube (**80**) is provided by two in number and forms two flows of refrigerant (two paths). The heat transfer tubes (**80**) are orthogonal to the heat transfer fins (**71**) and pass through the fin group (**70**) so as to meander between both lateral ends of the fin group (**70**).

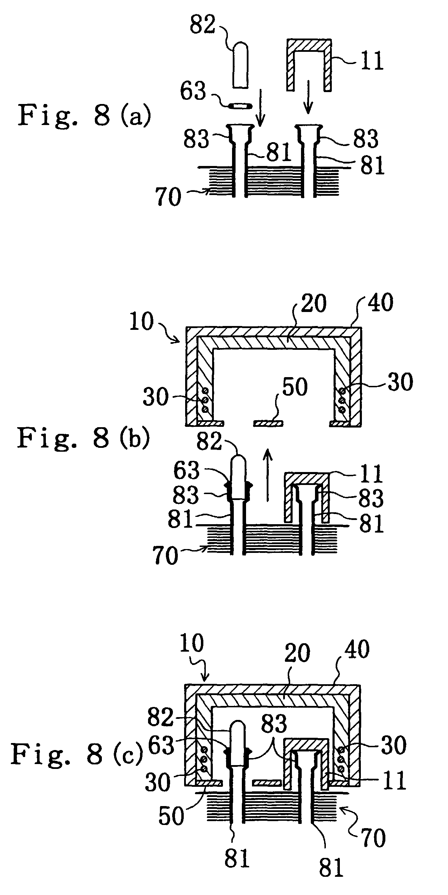

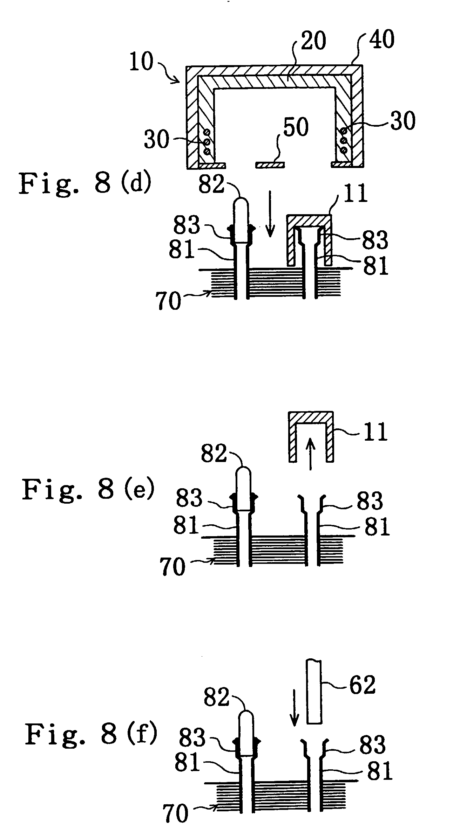

The heat transfer tube (**80**) consists of a plurality of hairpin-shaped heat transfer tube bodies (**81**) and a plurality of connection pipes (**82**). The heat transfer tube body (**81**) has the form of a long U. In detail, the heat transfer tube body (**81**) is formed in the length capable of passing through the fin group (**70**) from side to side and has two large-diameter connecting parts (**83**) respectively formed at two protruding ends of the heat transfer tube body (**81**) protruding from the fin group (**70**). As shown in Fig. **8**, out of the connecting parts (**83**) of the heat transfer tube bodies (**81**), one of the connecting parts (**83**) in each of two heat transfer tube bodies (**81**) as connecting ends located at both ends of the heat transfer tube (**80**) serves as a connecting part (**83**) for pipe to which a pipe (**62**) extending to the outside or the like is connected, while the other connecting part (**83**) serves as a connecting part (**83**) for connection pipe through which the heat transfer tube bodies (**81**) are connected to one another.

The fin group (**70**) and the heat transfer tube bodies (**81**) constitute a heat exchanger body (**61**) in a state that the heat transfer tube bodies (**81**) pass through the fin group (**70**). In other words, the heat exchanger body (**61**) is in a state that the connection pipes (**82**) are affixed to the heat transfer tube bodies (**81**).

The connection pipe (**82**) is for connecting the heat transfer tube bodies (**81**) to one another therethrough in order to form the heat transfer tube (**80**) from the plurality of heat transfer tube bodies (**81**), and has the shape of a short U. Both ends of the connection pipe (**82**) are inserted into the connecting parts (**83**) of the heat transfer tube bodies (**81**), respectively, and are connected thereto by brazing.

Next, the connection pipe connecting apparatus (**10**) will be described.

The connection pipe connecting apparatus (**10**) is an apparatus for brazing the connection pipe (**82**) to the heat transfer tube bodies (**81**) in the heat exchanger body (**61**) by brazing materials (**63**), and includes a heating cover (**20**), electric heaters (**30**), a heat insulating cover (**40**) and a heat insulating plate (**50**). The connecting part (**83**) of each of the heat transfer tube bodies (**81**) is a brazing region.

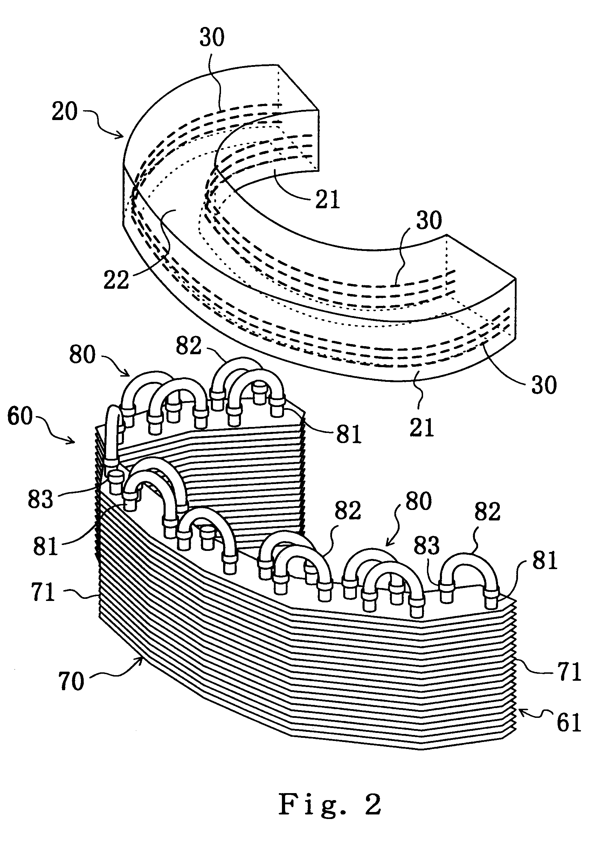

As shown in Fig. **2**, the heating cover (**20**) is formed so as to surround the protruding parts of the heat transfer tube (**80**) protruding from the fin group (**70**), and is made of ceramic or the like. The heating cover (**20**) is composed of a sidewall (**21**) for surrounding all the protruding parts located at one side of the heat transfer tube (**80**) and a topwall (**22**) for covering them from above, and is formed in a box the bottom surface of which is open. Further, the heating cover (**20**) is formed in an approximately half circle corresponding to the shape of the heat transfer fin, i.e., the form of the heat exchanger (**60**).

The electric heaters (**30**) are heating elements for heating the connecting parts (**83**) of the heat transfer tube bodies (**81**), and are embedded in a lower half of the sidewall (**21**) of the heating cover (**20**). The electric heaters (**30**) are provided, for example, by three in number, and are arranged so as to circumferentially extend surrounding the protruding parts of the heat transfer tube (**80**) and in vertically parallel with each other.

The electric heaters (**30**) are disposed so as to be positioned sideward of the connecting parts (**83**) of the heat transfer tube bodies (**81**). Thereby, the heating cover (**20**) is heated through the generation of heat from the electric heaters (**30**) and radiant heat emitted from the heating cover (**20**) heats the connecting parts (**83**) as brazing regions of the heat transfer tube bodies (**81**). At the time, a maximum part of radiant heat is supplied from the parts of the heating cover (**20**) where the electric heaters (**30**) are located, and the radiant heat connects the heat transfer tube bodies (**81**) to the connection pipes (**82**) by brazing.

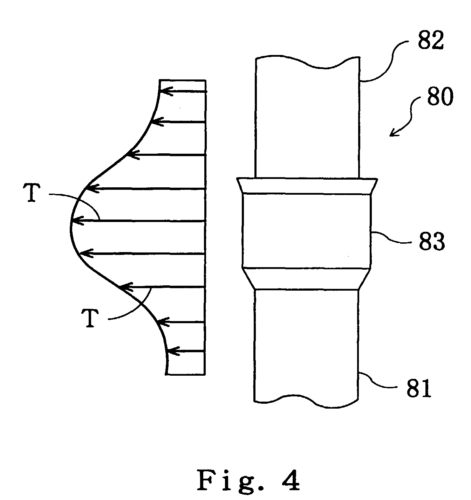

As shown in Fig. **4**, in the brazing between the heat transfer tube body (**81**) and the connection pipe (**82**), it is preferable that temperature T is a maximum value at the connecting part (**83**) and decreases with distance from the connecting part (**83**). For this purpose, the electric heaters (**30**) are provided in the heating cover (**20**) so as to be located sideward of the connecting parts (**83**) of the heat transfer tube bodies (**81**) when the protruding parts of the heat transfer tube (**80**) are set in a heating space inside the heating cover (**20**).

The heat insulating cover (**40**) is provided so as to cover the outer surfaces of the heating cover (**20**), is composed of a sidewall (**41**) and a topwall (**42**) in correspondence with the shape of the heating cover (**20**), and is formed in a box the bottom surface of which is open.

The heat insulating plate (**50**) is attached to the bottom end of the heating cover (**20**) so as to separate the bottom surface of the heating cover (**20**) and the fin group (**70**), and blocks heat conduction from the heating cover (**20**) to the heat transfer fins (**71**). In the heat insulating plate (**50**), there are formed through holes (**51**) through which the protruding ends of the heat transfer tube bodies (**81**) pass together with the connection pipes (**82**) such that the protruding parts of the heat transfer tube (**80**) are inserted into the heating space inside the heating cover (**20**).

Further, on the connecting parts (**83**) for pipe of the heat transfer tube bodies (**81**) to which no connection pipe (**82**) is connected, heat insulating caps (**11**) are provided. The heat insulating caps (**11**) are provided at the time of brazing to the connection pipes (**82**), and block communication between the heating space inside the heating cover (**20**) and the inner spaces of the heat transfer tube bodies (**81**) in order to prevent oxide films from being formed on the inner surfaces of the heat transfer tube bodies (**81**) through the application of heat.

### 〈Operation of Connection Pipe Connecting Apparatus〉

Next, the connecting operation of the connection pipe connecting apparatus (**10**) will be discussed together with a connection pipe connecting method characterizing the present invention, with reference to Fig. **8**.

First, the body (**61**) of the heat exchanger (**60**) is made (first step). Specifically, a plurality of U-shaped heat transfer tube bodies (**81**) and a multiplicity of heat transfer fins (**71**) are made. The heat transfer fins (**71**) are threaded onto the heat transfer tube bodies (**81**), and the heat transfer tube bodies (**81**) are then enlarged in diameter so as to be fixed to the heat transfer fins (**71**), thereby obtaining the heat exchanger body (**61**).

Next, as shown in Fig. **8**(**a**), the brazing materials (**63**) and the connection pipes (**82**) are set to the heat exchanger body (**61**) and the heat insulting caps (**11**) are attached (second step). Specifically, the heat exchanger body (**61**) is set such that the connecting parts (**83**) of the heat transfer tube bodies (**81**) are directed upward. In this state, ring-like brazing materials (**63**) are provided at connecting parts (**83**) for connection pipe of the heat transfer tube bodies (**81**), and the ends of the connection pipes (**82**) are inserted into the connecting parts (**83**) for connection pipe, respectively. Further, the heat insulating caps (**11**) are attached to the connecting parts (**83**) for pipe of the heat transfer tube bodies (**81**).

Thereafter, as shown in Figs. **8**(**b**) and **8**(**c**), the heat transfer tube (**80**) of the heat exchanger body (**61**), to which the connection pipes (**82**) and the like are set, is inserted into the heating cover (**20**) and is heated (third step). Specifically, the heat exchanger body (**61**) to which the connection pipes (**82**) and the like are set is moved below the connection pipe connecting apparatus (**10**) and is then moved upward (See Fig. **8**(**b**)).

Through the upward movement of the heat exchanger body (**61**), the protruding ends of the plurality of heat transfer tube bodies (**81**) enter, together with the connection pipes (**82**), the heating space of the heating cover (**20**) through the through holes (**51**) of the heat insulating plate (**50**) so that the heat exchanger body (**61**) is set in place. In other words, the heat exchanger body (**61**) is placed such that the connecting parts (**83**) of the heat transfer tube bodies (**81**) are located sideward of the electric heaters (**30**). In this state, the electric heaters (**30**) are operated for heating (See Fig. **8**(**c**)).

Through the generation of heat by the electric heaters (**30**), the heating cover (**20**) is heated, and in particular, the parts of the heating cover (**20**) where the electric heaters (**30**) are disposed are most heated to emit a maximum part of radiant heat. The radiant heat heats the heat transfer tube bodies (**81**) and the connection pipes (**82**). As shown in Fig. **4**, the connecting parts (**83**) of the heat transfer tube bodies (**81**) are most heated so that the brazing materials (**63**) melt to penetrate the contact surfaces between the heat transfer tube bodies (**81**) and the connection pipes (**82**). At the time of heating, since the connecting parts (**83**) are staggered when viewed from the surface of the heat exchanger body (**61**), they are heated substantially uniformly through the application of heat generated by the electric heaters (**30**) located on both sides.

Subsequently, as shown in Figs. **8**(**d**) and **8**(**e**), the heat transfer tube (**80**) of the heat exchanger body (**61**) is extracted from the heating cover (**20**) (fourth step). Specifically, since the brazing materials (**63**) penetrate the contact surfaces between the heat transfer tube bodies (**81**) and the connection pipes (**82**), the heat exchanger body (**61**) is moved downward so as to extract the heat transfer tube (**80**) from the heating cover (**20**), the connecting parts (**83**) and the surroundings are cooled, and the heat insulating caps (**11**) are removed. In this manner, the connection between the heat transfer tube bodies (**81**) and the connection pipes (**82**) are completed.

Finally, as shown in Fig. **8**(**f**), the pipes (**62**) are connected to the heat transfer tube (**80**) (fifth step). Specifically, the pipes (**62**) extending toward the outside or the like are individually brazed to the connecting parts (**83**) for pipe of the heat transfer tube bodies (**81**) by manual operation or other methods. In this manner, the brazing of the heat exchanger (**60**) is completed.

### 〈Effects of Embodiment 1〉

According to this embodiment as described so far, since all the connecting parts (**83**) of the heat transfer tube bodies (**81**) in the heat exchanger body (**61**) are surrounded, together with the connection pipes (**82**), by the heating cover (**20**) and are heated by the electric heaters (**30**) provided in the heating cover (**20**), the connecting parts (**83**) can be prevented from locally increasing in temperature and can be heated substantially uniformly. This provides uniform penetration of the brazing materials (**63**) and therefore improves brazing accuracy, thereby increasing the stability of brazing quality.

Further, since all the connecting parts (**83**) of the heat transfer tube bodies (**81**) in the heat exchanger body (**61**) can be heated together and the connection pipes (**82**) can be brazed at once, this simplifies the brazing work and decreases the brazing time, thereby improving brazing efficiency.

Furthermore, even when the heat exchanger (**60**) has various kinds of complicated forms such as a half circle, it is essential only to change the shape of the heating cover (**20**) and the like so as to conform with the form of the heat exchanger body (**61**), which facilitates the brazing of the connection pipe (**82**) in various kinds of heat exchangers (**10**).

Moreover, since the protruding parts of the heat transfer tube (**80**) are surrounded by the heating cover (**20**), an amount of heat to be dissipated to the outside can be reduced. In particular, since the heating cover (**20**) is covered with the heat insulating cover (**40**), an amount of heat to be dissipated to the outside can extremely be reduced. This extremely decreases heat loss, which improves heating efficiency.

Further, since the heat insulating plate (**50**) is provided so as to establish heat insulation between the heating cover (**20**) and the fin group (**70**), thermal influences on the heat transfer fins (**71**) and the like can be prevented. Specifically, the heat transfer fins (**71**) and the like can be surely prevented from changing in color and quality.

Furthermore, since the heat insulating caps (**11**) are provided on the connecting parts for pipe (**83**) of the heat transfer tube bodies (**81**), the surfaces of the heat transfer tube bodies (**81**) can surely be prevented from producing oxide films and in particular, the inner surfaces of the heat transfer tube bodies (**81**) can surely be prevented from producing oxide films. This ensures brazing quality at the later step (fifth step).

### -Embodiment 2-

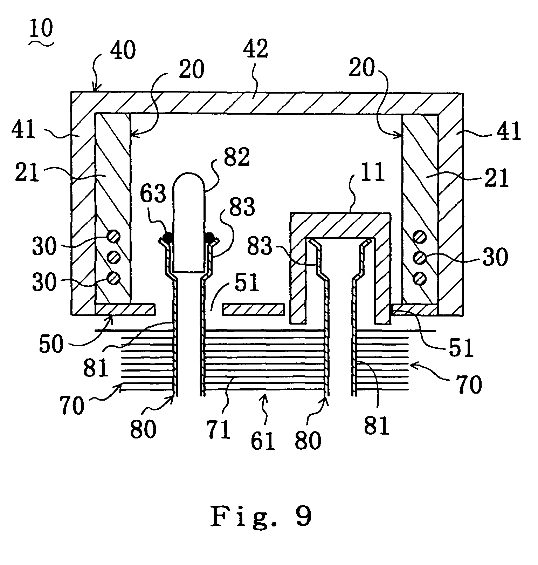

Instead of Embodiment 1 in which the heating cover (**20**) has the topwall (**22**) and therefore is in the form of an inverted U in section, a heating cover (**20**) in this embodiment is formed of a sidewall (**21**) only, without providing a topwall (**22**), as shown in Fig. **9**.

The heating cover (**20**) is formed of the sidewall (**21**) only so as to surround all the connecting parts (**83**) of the heat transfer tube bodies (**81**) in the heat exchanger body (**61**) sideways and is open at its top and bottom surfaces. The heating cover (**20**) is covered with a heat insulating cover (**40**), and the top surface of the heating cover (**20**) is closed by a topwall (**42**) of the heat insulating cover (**40**).

Heat generated in the electric heaters (**30**) is conducted to the heating cover (**20**). However, since the heating cover (**20**) has no topwall (**22**), an amount of heat conducted to the heating cover (**20**) is only an amount of heat transferred to the sidewall (**21**). As a result, an amount of radiant heat from the parts of the heating cover (**20**) where the electric heaters (**30**) are located is increased, so that the temperature of the connecting parts (**83**) is increased.

Structures of the heat insulating plate (**50**) and other parts are the same as in Embodiment 1.

### 〈Operation of Connection Pipe Connecting Apparatus〉

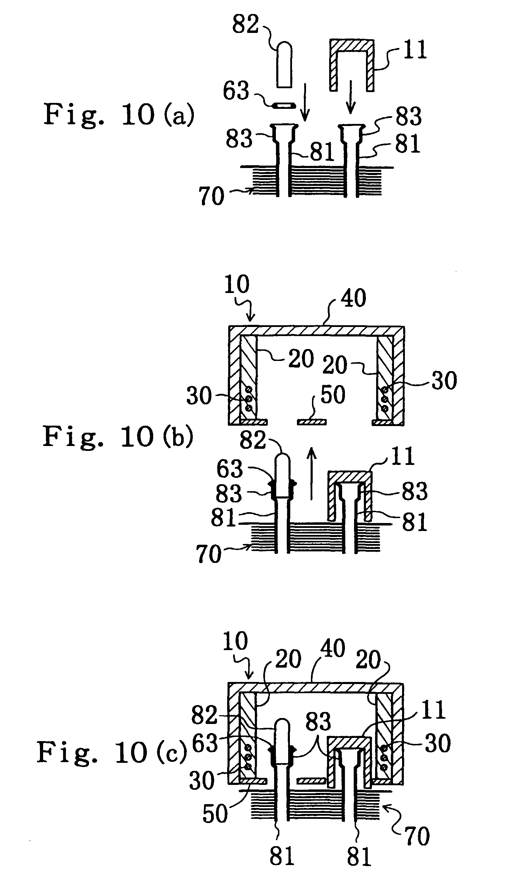

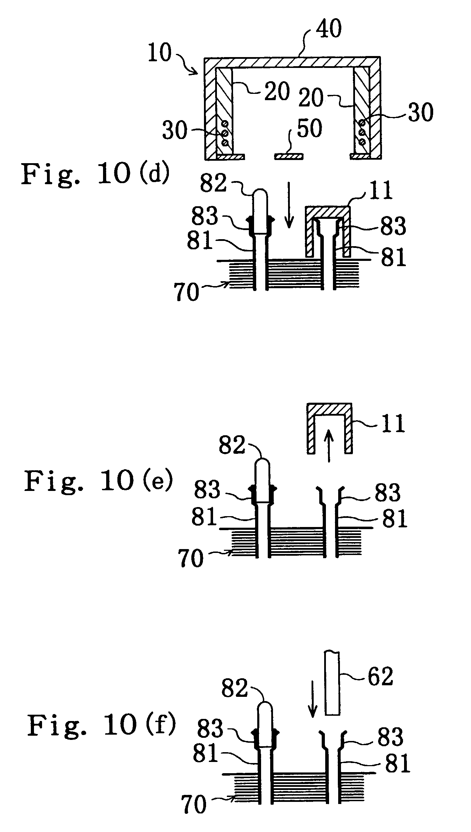

Next, the connecting operation of the connection pipe connecting apparatus (**10**) will be discussed with reference to Fig. **10**. Since it is basically the same as in the operation of Embodiment 1, brief description will be made here.

First, in the first step, the heat transfer fins (**71**) are threaded onto the heat transfer tube bodies (**81**), and the heat transfer tube bodies (**81**) and the heat transfer fins (**71**) are then fixed thereby obtaining the heat exchanger body (**61**).

Next, in the second step, as shown in Fig. **10**(**a**), the brazing materials (**63**) and the connection pipes (**82**) are provided on the connecting parts (**83**) for connection pipe of the heat transfer tube bodies (**81**), and the heat insulating caps (**11**) are attached to the connecting parts (**83**) for pipe, respectively.

Thereafter, in the third step, the heat exchanger body (**61**) is moved below the connection pipe connecting apparatus (**10**), the protruding ends of the plurality of heat transfer tube bodies (**81**) are introduced, together with the connection pipes (**82**), into the heating cover (**20**) (See Fig. **10**(**b**)), and the electric heaters (**30**) are operated for heating (See Fig. **10**(**c**)). Through the application of heat by the electric heaters (**30**), the brazing materials (**63**) melt to penetrate the contact surfaces between the heat transfer tube bodies (**81**) and the connection pipes (**82**).

Subsequently, in the fourth step, as shown in Figs. **10**(**d**) and **10**(**e**), the heat transfer tube (**80**) is extracted from the heating cover (**20**), the connecting parts (**83**) and the surroundings are cooled, and the heat insulating caps (**11**) are removed.

Finally, in the fifth step, as shown in Fig. **10**(**f**), the pipes (**62**) are connected to the connecting parts (**83**) for pipe of the heat transfer tube bodies (**81**) by brazing, respectively. In this manner, the brazing of the heat exchanger (**60**) is completed.

Other operations are the same as in Embodiment 1.

### 〈Effects of Embodiment 2〉

According to this embodiment as described so far, since the heating cover (**20**) is formed of the sidewall (**21**) only so as to surround the side of the heat transfer tube (**80**), an amount of heat to be applied from the parts of the heating cover (**20**) where the electric heaters (**30**) are located can be increased. This increases an amount of heat for heating the connecting parts (**83**) as brazing regions of the heat transfer tube bodies (**81**), which reduces the brazing time. On the contrary, when the amount of heat for heating the brazing regions is not changed, an amount of voltage to be applied to the electric heaters (**30**) can be reduced.

Other effects such as improvement in brazing accuracy are the same as in Embodiment 1.

### -Embodiment 3-

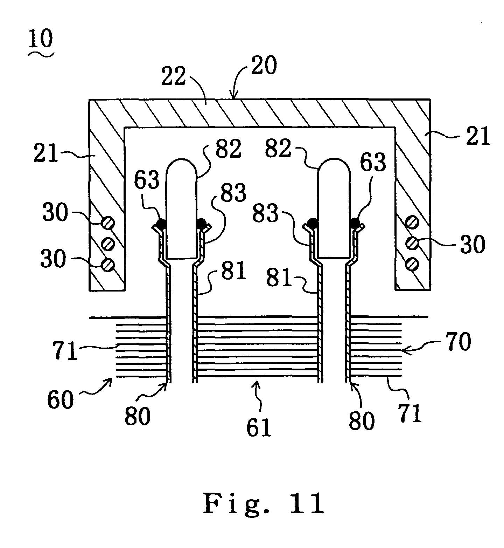

Instead of Embodiment 1 in which the heating cover (**20**) is provided with the heat insulating cover (**40**) and the heat insulating plate (**50**), as shown in Fig. **11**, the present embodiment has a structure that the heat insulating cover (**40**) and the heat insulating plate (**50**) are eliminated in Embodiment **1**.

Like the above-mentioned Embodiment 1, the heating cover (**20**) is composed of a sidewall (**21**) and a topwall (**22**), and electric heaters (**30**) are embedded in the sidewall (**21**) of the heating cover (**20**).

In this embodiment, heat is emitted from the outer periphery and the bottom opening of the heating cover (**20**) to the outside. However, since there is provided no heat insulating cover (**40**) and no heat insulating plate (**50**), this reduces the number of elements thereby simplifying the structure. In particular, heating to the connecting parts (**83**) of the heat transfer tube bodies (**81**) is made mainly by radiant heat from the parts of the heating cover (**20**) where the electric heaters (**30**) are located, which ensures the brazing work.

Other structures, operations and effects are the same as in Embodiment 1.

### -Embodiment 4-

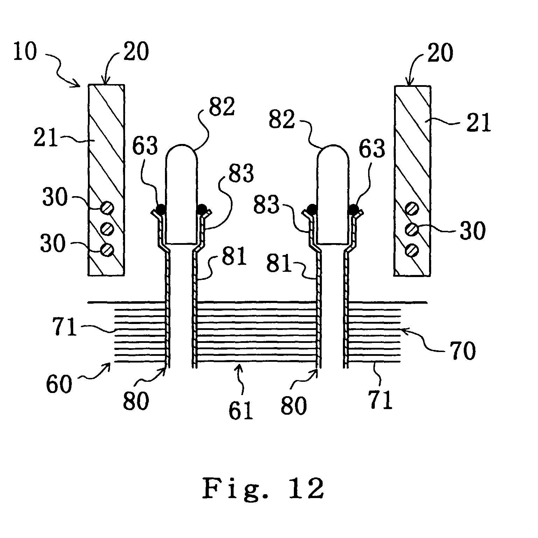

Instead of Embodiment 2 in which the heating cover (**20**) is provided with the heat insulating cover (**40**), as shown in Fig. **12**, the present embodiment has a structure that the heat insulating cover (**40**) is eliminated in Embodiment 2. In other words, this embodiment is composed such that the heat insulating cover (**40**), the topwall (**22**) of the heating cover (**20**) and the heat insulating plate (**50**) are eliminated from the connection pipe connecting apparatus (**10**) in Embodiment 1.

Like the above-mentioned Embodiment 2, the heating cover (**20**) is composed of the sidewall (**21**) only, and electric heaters (**30**) are embedded in the sidewall (**21**) of the heating cover (**20**).

In this embodiment, heat is emitted from the top, the bottom and the outer periphery of the heating cover (**20**) to the outside. However, like Embodiment 3, since there is provided no heat insulating cover (**40**) and no heat insulating plate (**50**), this reduces the number of elements thereby simplifying the structure. In particular, heating to the connecting parts (**83**) of the heat transfer tube bodies (**81**) is made mainly by radiant heat from the parts of the heating cover (**20**) where the electric heaters (**30**) are located, which ensures the brazing work.

Other structures, operations and effects are the same as in Embodiment 2.

### -Embodiment 5-

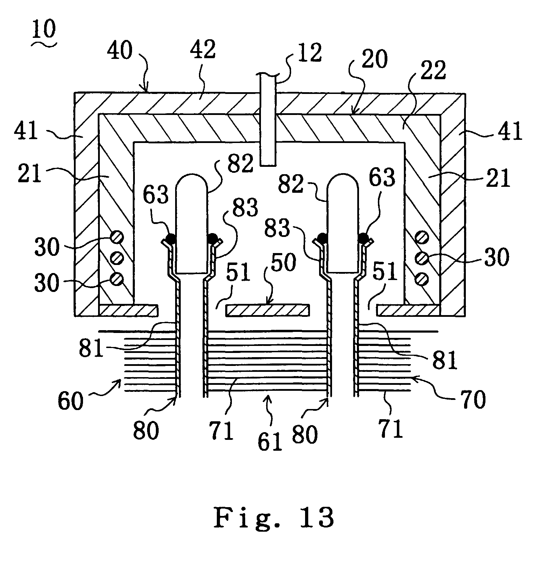

As shown in Fig. **13**, the present embodiment has a structure that a gas supply pipe (**12**) is connected to the heating cover (**20**) of Embodiment 1.

The gas supply pipe (**12**) is for supplying an inert gas such as nitrogen to a heating space inside the heating cover (**20**), and passes through a topwall (**42**) of a heat insulating cover (**40**) and a topwall (**22**) of the heating cover (**20**) such that one end thereof is open in the heating space. Though not shown, the other end of the gas supply pipe (**12**) is connected to an inert gas supply. The gas supply pipe (**12**) is composed so as to supply the inert gas to the heating space inside the heating cover (**20**) at the time of brazing between the heat transfer tube bodies (**81**) and the connection pipes (**82**).

According to this embodiment, in the third step where the connecting parts (**83**) of the heat transfer tube bodies (**81**) are heated, an inert gas is supplied to the heating space inside the heating cover (**20**) through the gas supply pipe (**12**).

As a result, at the time of brazing, it can be restrained that the surfaces of the heat transfer tube bodies (**81**) and the surfaces of the connection pipes (**82**) each produce an oxide film. In particular, the use of the inert gas can restrain the outer surfaces of the heat transfer tube bodies (**81**) and the outer surfaces of the connection pipes (**82**) from producing oxide films. The heat insulating caps (**11**) can restrain the inner surfaces of the heat transfer tube bodies (**81**) from producing oxide films. In this manner, the heat transfer tube (**80**) can be kept clean and refrigerant flowing through the heat transfer tube (**80**) can surely be prevented from being mixed with foreign substances.

Other structures, operations and effects are the same as in Embodiment 1.

### -Embodiment 6-

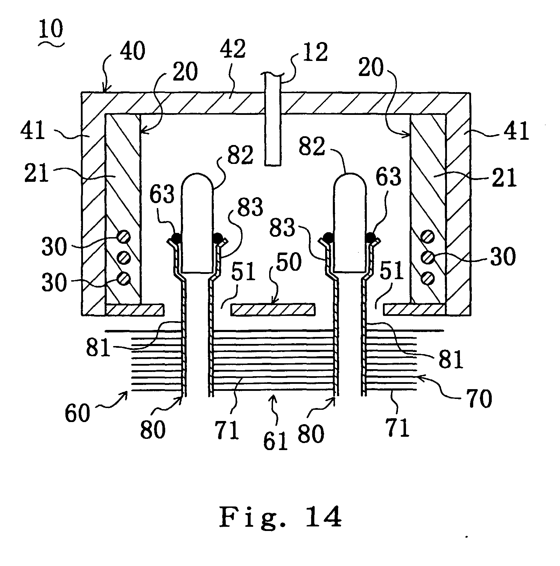

As shown in Fig. **14**, the present embodiment has a structure that a gas supply pipe (**12**) is connected to the heat insulating cover (**40**) of Embodiment 2.

The gas supply pipe (**12**) has the same structure as in Embodiment 5 and supplies an inert gas such as nitrogen to the heating space inside the heating cover (**20**). Meanwhile, the heating cover (**20**) is composed of the sidewall (**21**) only and therefore, the inert gas from the gas supply pipe (**12**) is supplied to the heating space inside the heat insulating cover (**40**).

Accordingly to the present embodiment, like Embodiment 5, in the third step where the connecting parts (**83**) of the heat transfer tube bodies (**81**) are heated, an inert gas is supplied to the heating space inside the heating cover (**20**) through the gas supply pipe (**12**).

As a result, like Embodiment 5, it can be restrained that the surfaces of the heat transfer tube bodies (**81**) and the surfaces of the connection pipes (**82**) each produce an oxide film at the time of brazing.

Other structures, operations and effects are the same as in Embodiment 1.

### -Embodiment 7-

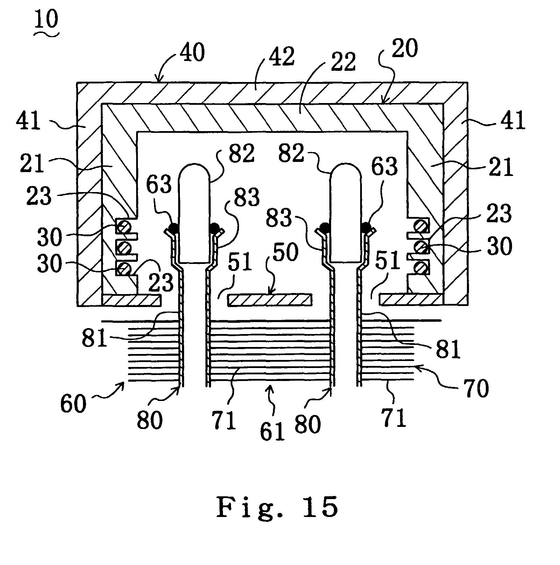

Instead of Embodiment 1 in which the electric heaters (**30**) are embedded in the heating cover (**30**), as shown in Fig. **15**, electric heaters (**30**) are exposed in this embodiment.

Specifically, in a lower part of the inner periphery of the sidewall (**21**) of the heating cover (**20**), mounting grooves (**23**) U-shaped in section are formed. The mounting grooves (**23**) are vertically arranged by three in number so as to correspond to the electric heaters (**30**) and extend in a circumferential direction of the sidewall (**21**) of the heating cover (**20**). The electric heaters (**30**) are inserted into the mounting grooves (**23**) such that heat generated in the electric heaters (**30**) is directly emitted to the connecting parts (**83**) of the heat transfer tube bodies (**81**).

According to the present embodiment, in the third step where the connecting parts (**83**) of the heat transfer tube bodies (**81**) are heated, the electric heaters (**30**) are operated for heating. Heat generated in the electric heaters (**30**) is directly emitted to the connecting parts (**83**) of the heat transfer tube bodies (**81**) while conducted to the heating cover (**20**).

As a result, the connecting parts (**83**) of the heat transfer tube bodies (**81**) can surely be heated. This ensures an amount of heat necessary for brazing, which further improves brazing accuracy.

Other structures, operations and effects are the same as in Embodiment 1.

### -Embodiment 8-

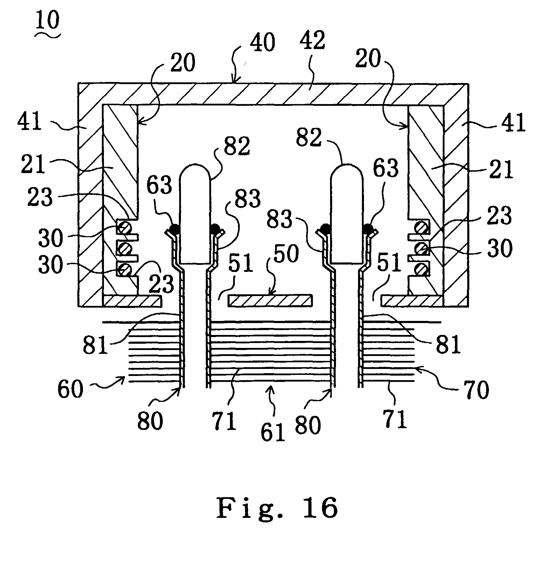

Instead of Embodiment 2 in which the electric heaters (**30**) are embedded in the heating cover (**20**), as shown in Fig. **16**, electric heaters (**30**) are exposed in this embodiment. In other words, the present embodiment has a structure that the topwall (**22**) of the heating cover (**20**) of Embodiment 7 is eliminated.

Like Embodiment 7, in the sidewall (**21**) of the heating cover (**20**), mounting grooves (**23**) U-shaped in section are formed. The electric heaters (**30**) are inserted into the mounting grooves (**23**) such that heat generated in the electric heaters (**30**) is directly emitted to the connecting parts (**83**) of the heat transfer tube bodies (**81**).

According to the present embodiment, like Embodiment 7, in the third step where the connecting parts (**83**) of the heat transfer tube bodies (**81**) are heated, heat generated in the electric heaters (**30**) is directly emitted to the connecting parts (**83**) of the heat transfer tube bodies (**81**) while conducted to the heating cover (**20**).

As a result, like Embodiment 7, the connecting parts (**83**) of the heat transfer tube bodies (**81**) can surely be heated. This further improves brazing accuracy.

Other structures, operations and effects are the same as in Embodiment 1.

### -Other Embodiments of the Invention-

The above-mentioned embodiments describe the arcuate heat exchanger (**60**). However, it is a matter of course that the present invention can be applied to various kinds of heat exchangers (**60**) such as an L-shaped heat exchanger and a V-shaped heat exchanger.

The mounting grooves (**23**) of Embodiments 7 and 8 may be applied to Embodiments 5 and 6.

In the above embodiments, the connection pipe connecting apparatus (**10**) is fixedly set and the heat exchanger (**60**) is moved upward and downward to the connection pipe connecting apparatus (**10**). On the contrary, there can be a structure that the connection pipe connecting apparatus (**10**) is movably set so as to be moved upward and downward to the heat exchanger (**60**).

Prior to the third step where the heat transfer tube bodies (**81**) and the connection pipes (**82**) are inserted into the heating cover (**20**), the heat transfer tube bodies (**81**) and the like may be previously heated. In this case, the heating time by the electric heaters (**30**) can be reduced.

### [Industrial Applicability]

As mentioned so far, the connection pipe connecting method and the connection pipe connecting apparatus of the present invention are useful for connection between the heat transfer tube bodies having a large number of brazing points and the connection pipes in the heat exchanger, and are particularly useful for the case where the heat exchanger is formed in various kinds of shapes.

## Claims

1. A method of connecting a connection pipe of a heat exchanger, comprising:
a first step of passing bodies (**81**) constituting a heat transfer tube (**80**) through a fin group (**70**) formed of a multiplicity of heat transfer fins (**71**) laminated at predetermined intervals thereby forming a body (**61**) of a heat exchanger;
a second step of providing, after the first step, brazing materials (**63**) to connecting parts (**83**) formed at protruding ends of the heat transfer tube bodies (**81**) protruding from the fin group (**70**), respectively and inserting a connection pipe (**82**) constituting the heat transfer tube (**80**) into the connecting parts (**83**) of the heat transfer tube bodies (**81**) to set the connection pipe (**82**) therebetween;
a third step of inserting, after the second step, the protruding ends of the heat transfer tube bodies (**81**) and the connection pipe (**82**) into a heating cover (**20**) which is formed to surround a protruding part of the heat transfer tube (**80**) formed of the protruding ends of the heat transfer tube bodies (**81**) and the connection pipe (**82**) and has a heater (**30**), positioning the heater (**30**) sideward of the connecting parts (**83**) of the heat transfer tube bodies (**81**) and operating the heater (**30**) for heating the connecting parts (**83**) of the heat transfer tube bodies (**81**) thereby melting the brazing material (**63**); and
a fourth step of extracting, after the third step, the protruding ends of the heat transfer tube bodies (**81**) and the connection pipe (**82**) from the heating cover (**20**) to cool them thereby completing the brazing between the heat transfer tube bodies (**81**) and the connection pipe (**82**).

2. The method of connecting a connection pipe of a heat exchanger according to claim 1, further comprising
after the fourth step, a fifth step of connecting pipes (**62**) to two connecting parts (**83**) for pipe of the heat transfer bodies (**81**) located at both ends of the heat transfer tube (**80**).

3. The method of connecting a connection pipe of a heat exchanger according to claim 1, wherein
in the third step, an inert gas is supplied to a heating space inside the heating cover (**20**) through a gas supply pipe (**12**).

4. The method of connecting a connection pipe of a heat exchanger according to claim 1, wherein
in the second step, heat insulating caps (**11**) are respectively set on the two connecting parts (**83**) for pipe as both ends of the heat transfer tube (**80**) to which the pipes (**62**) are respectively connected in addition to the insertion of the connection pipe (**82**), and
in the fourth step, the heat insulating caps (**11**) are removed from the heat transfer tube bodies (**81**) in addition to the cooling of the heat transfer tube bodies (**81**) and the connection pipe (**82**).

5. The method of connecting a connection pipe of a heat exchanger according to any one of claims 1 to 4, wherein
the heating cover (**20**) is open at its top and bottom surfaces for surrounding only the side of the protruding part of the heat transfer tube (**80**).

6. The method of connecting a connection pipe of a heat exchanger according to any one of claims 1 to 4, wherein
the heating cover (**20**) is formed in a box the bottom surface of which is open for surrounding the side and the top of the protruding part of the heat transfer tube (**80**).

7. The method of connecting a connection pipe of a heat exchanger according to any one of claims 1 to 4, wherein
a heat insulating cover (**40**) for covering the side and top surfaces of the heating cover (**20**) is provided outside the heating cover (**20**).

8. The method of connecting a connection pipe of a heat exchanger according to any one of claims 1 to 4, wherein
the heater (**30**) is embedded in the heating cover (**20**).

9. The method of connecting a connection pipe of a heat exchanger according to any one of claims 1 to 4, wherein
the heater (**30**) is provided in a manner to be exposed inwardly from the heating cover (**20**).

10. The method of connecting a connection pipe of a heat exchanger according to any one of claims 1 to 4, wherein
a heat insulating plate (**50**) for separating the bottom of the heating cover (**20**) and the fin group (**70**) is provided at the bottom end of the heating cover (**20**), and
a through hole (**51**) through which the protruding part of the heat transfer tube (**80**) passes is formed in the heat insulating plate (**50**).

11. An apparatus for connecting a connection pipe of a heat exchanger including: a fin group (**70**) formed of a multiplicity of heat transfer fins (**71**) laminated at predetermined intervals; and a heat transfer tube (**80**) formed of bodies (**81**) which passes through the fin group (**70**) and have protruding ends protruding from the fin group (**70**) and a connection pipe (**82**) connected to the heat transfer tube bodies (**81**) at connecting parts (**83**) formed at the protruding ends of the heat transfer tube bodies (**81**),
said apparatus comprising:
a heating cover (**20**) formed to accommodate and surround a protruding part of the heat transfer tube (**80**) protruding from the fin group (**70**); and
a heater (**30**), provided in the heating cover (**20**) to come sideward of the connecting parts (**83**) of the heat transfer tube bodies (**81**), for melting brazing materials (**63**) provided at the connecting parts (**83**) of the heat transfer tube bodies (**81**) by heating the connecting parts (**83**) in a state that the connection pipe (**82**) is inserted into the connecting parts (**83**) and is set therebetween.

12. The apparatus for connecting a connection pipe of a heat exchanger according to claim 11, wherein
the heating cover (**20**) is open at its top and bottom surfaces for surrounding only the side of the protruding part of the heat transfer tube (**80**).

13. The apparatus for connecting a connection pipe of a heat exchanger according to claim 11, wherein
the heating cover (**20**) is formed in a box the bottom surface of which is open for surrounding the side and the top of the protruding part of the heat transfer tube (**80**).

14. The apparatus for connecting a connection pipe of a heat exchanger according to claim 11, wherein
a heat insulating cover (**40**) for covering the side and top surfaces of the heating cover (**20**) is provided outside the heating cover (**20**).

15. The apparatus for connecting a connection pipe of a heat exchanger according to claim 11, wherein
the heater (**30**) is embedded in the heating cover (**20**).

16. The apparatus for connecting a connection pipe of a heat exchanger according to claim 11, wherein
the heater (**30**) is provided in a manner to be exposed inwardly from the heating cover (**20**).

17. The apparatus for connecting a connection pipe of a heat exchanger according to claim 11, wherein
a heat insulating plate (**50**) for separating the bottom of the heating cover (**20**) and the fin group (**70**) is provided at the bottom end of the heating cover (**20**), and
a through hole (**51**) through which the protruding part of the heat transfer tube (**80**) passes is formed in the heat insulating plate (**50**).
